(19) Europäisches Patentamt

European Patent Office

Office européen des brevets

(11) Numéro de publication: **0 388 274**

**A1**

(12) **DEMANDE DE BREVET EUROPEEN**

(21) Numéro de dépôt: 90400651.7

(22) Date de dépôt: **13.03.90**

(51) Int. Cl.⁵: **H02P 5/408**

(30) Priorité: **13.03.89 FR 8903254**

(43) Date de publication de la demande:
**19.09.90 Bulletin 90/38**

(84) Etats contractants désignés:
**DE ES GB IT**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Herent, Gérard**
**8, Avenue du Bois**
**F-92190 Meudon(FR)**
Inventeur: **Vilain, Jean-Paul**
**96, rue de Machemait, Petit Mélicocq**
**F-60150 Thourotte(FR)**
Inventeur: **Fontaine, Jean-Claude**
**3, Impasse de la Grande Pièce, Bailleval**
**F-60140 Liancourt(FR)**

(74) Mandataire: **Saint Martin, René et al**
**Régie Nationale des Usines Renault**
**Direction des Recherches et**
**Développements Service 0804 8-10, Avenue Emile-Zola**
**F-92109 Boulogne Billancourt Cedex(FR)**

(54) Système de commande en couple d'un moteur asynchrone.

㊝ Système de commande en couple d'un moteur asynchrone accouplé en rotation à un capteur de vitesse et dont les enroulements statoriques sont alimentés par un amplificateur à découpage piloté par une electronique de commande recevant le signal dudit capteur, caractérisé par le fait que le capteur est un codeur incrémental (3) à faible résolution et que l'électronique de commande comporte des moyens pour que l'amplificateur à découpage fournisse au moteur des courants sinusoidaux polyphasés équilibrés de manière à maintenir une pulsation constante des courants rotoriques.

FIG.1

EP 0 388 274 A1

## SYSTEME DE COMMANDE EN COUPLE D'UN MOTEUR ASYNCHRONE.

La présente invention concerne un système de commande en couple d'un moteur asynchrone accouplé en rotation à un capteur de vitesse et dont les enroulements statoriques sont alimentés par un amplificateur à découpage piloté par une électronique de commande recevant le signal dudit capteur.

Le moteur asynchrone à cage d'écureuil ou à rotor massif intéresse de plus en plus les automaticiens par ses qualités de fiabilité et de robustesse et son prix modeste.

Le développement de l'électronique de puissance et des microprocesseurs permet de réaliser des commandes performantes. De nombreux travaux s'effectuent depuis quelques années sur des asservissements en vitesse et en position. Ces études commencent à déboucher sur des applications industrielles.

Avec les procédés connus d'alimentation (réseau de tensions triphasées équilibrées) on impose une tension précise aux bornes de chaque phase.

Avec les convertisseurs électroniques de puissance, il est devenu aussi aisé d'imposer des courants sinusoidaux triphasés équilibrés dans les bobines statoriques.

On connait par le brevet US 4.628.473 un système à contrôle vectoriel. Ce genre de contrôle qui conduit à une grande précision nécessite la connaissance de la valeur instantanée du vecteur flux dans la machine. Celui-ci peut être soit mesuré directement par un capteur de flux soit évalué à partir des tensions à l'aide de moyens de calcul relativement complexes et incompatibles avec le milieu automobile.

La présente invention a pour but de fournir un système de contrôle du couple avec une commande en courant. Ce mode de contrôle est meilleur qu'un contrôle en tension, en régime dynamique. Le contrôle scalaire réalisé conduit à une précision sur le couple qui est suffisante pour un bon nombre d'applications.

Le système est caractérisé par le fait que le capteur est un codeur Incrémental à faible résolution et que l'electronique de commande comporte des moyens Pour que l'amplificateur à découpage fournisse au moteur des courants sinusoidaux polyphasés équilibrés de manière à maintenir une pulsation constante des courants rotoriques.

Selon une caractéristique de l'invention, le système comporte des moyens pour traiter le signal du capteur incrémental par un multiplieur de fréquence, des moyens pour additionner la fréquence sortant du multiplieur à une fréquence d'horloge, des moyens pour envoyer le signal somme à des mémoires contenant deux sinusoides échantillonnées et des moyens pour envoyer ces sinusöides échantillonnées sur un convertisseur numérique-analogique fournissant à l'amplificateur à découpage des signaux sinusöidaux dont l'amplitude est par ailleurs déterminée par une consigne de couple de façon à ce que celui-ci alimente le moteur par des courants proportionnels à ces signaux.

Selon une autre caractéristique, le système comporte des moyens recevant la consigne de couple et recevant le signal somme et fournissant un signal de correction au convertisseur numérique-analogique.

L'invention va maintenant être décrite avec plus de détails en se référant à un mode de réalisation donné à titre d'exemple et représenté par les dessins annexés.

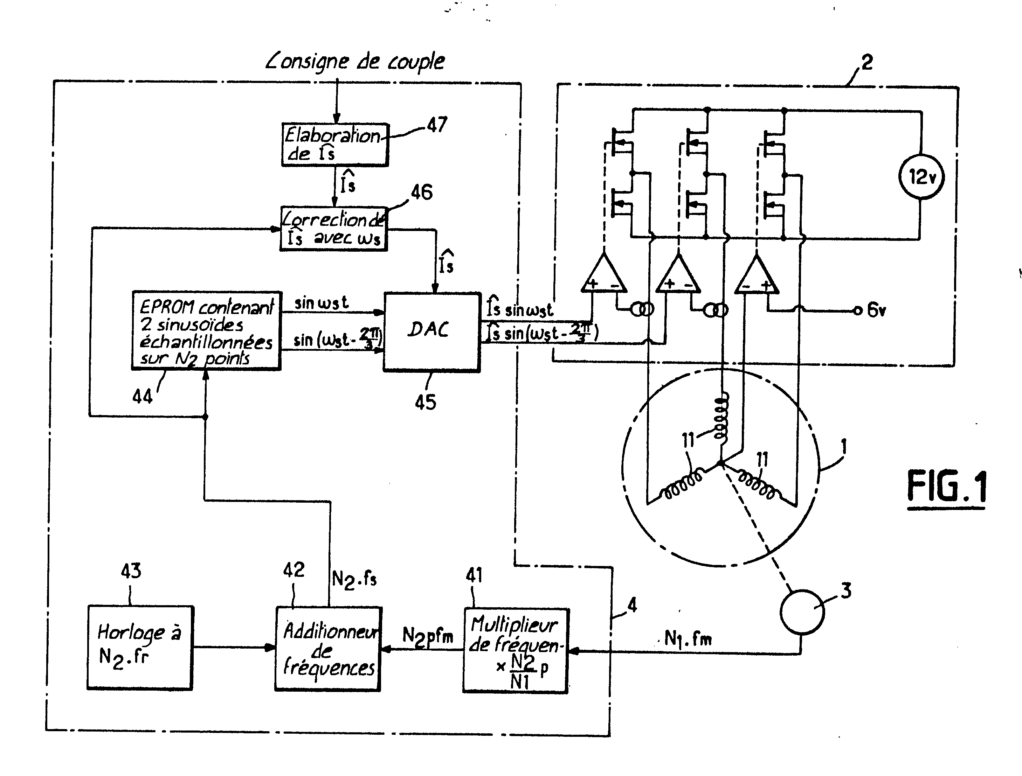

- La figure 1 est un schéma du système selon l'invention.

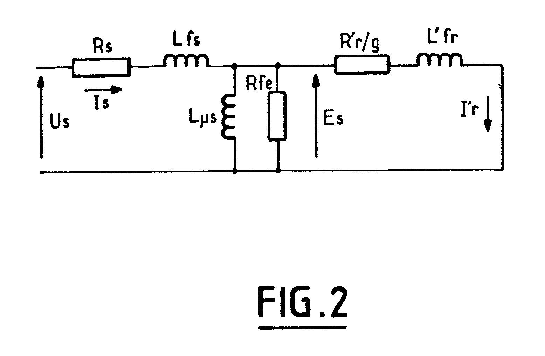

- La figure 2 est un schéma équivalent à une phase du moteur.

En se référant aux dessins, le système comporte un moteur asynchrone dont les bobinages statoriques sont repérés 11.

Les bobinages 11 sont alimentés en courants sinusoidaux polyphasés à l'aide d'un amplificateur de courant à découpage 2 constitué par un onduleur à trois bras de pont.

Le rotor du moteur asynchrone est mécaniquement accouplé à un codeur incrémental 3. A titre indicatif, le codeur incrémental peut être un roulement instrumenté qui intègre la fonction de capteur incrémental au roulement à billes.

Le codeur 3 fournit un signal à une électronique de commande 4 qui contrôle les courants de sortie de deux des trois sorties de l'onduleur 2.

L'électronique de commande 4 comprend un multiplieur de fréquence 41 qui reçoit en entrée, en provenance du codeur 3, un signal dont la fréquence est proportionnelle à la vitesse du rotor du moteur. Le multiplieur fournit un signal dont la fréquence est le produit de celle du signal d'entrée par un facteur de multiplication.

Le signal de sortie du multiplieur 41 est envoyé à un additionneur de fréquence 42 qui reçoit par ailleurs, un signal d'une horloge 43. Le signal de sortie de l'additionneur 42 est envoyé à une mémoire 44, type EPROM, contenant 2 sinusoides échantillonnées.

Les deux signaux sinusoidaux numérisés sortant de la mémoire sont envoyés à un convertisseur digital-analogique (DAC) 45 recevant par ailleurs, un signal I's et pilotant par des consignes sinusoidales l'amplificateur à découpage 2.

L'électronique de commande reçoit une consigne de couple et par l'intermédiaire d'un circuit 47 puis d'un circuit de correction 46 recevant le signal de l'additionneur 42 elle fournit le signal I*s au convertisseur digital analogique 45.

Le procédé est le suivant :

Il faut maintenir $w_s = w_r P^{w}m$

soit $f_s = f_r + P f_m$

ou

- $^{w}m$ est la vitesse mécanique.
- $w_s$ est la pulsation du courant statorique et p le nombre de paires de pôles.
- $w_r$ est la pulsation du courant rotorique.

Les sinusoides sont enregistrées sous forme échantillonnée à raison de $N_2$ points par période dans les mémoires 44. Il faut donc lire ces mémoires à la fréquence de $N_2.f_s$.

- $N_2.f_s = N_2.f_r + N_2.p.f_m$

Le codeur incrémental 3 délivre $N_1$ impulsions par tour. La fréquence de ces impulsions est donc égale à $N_1.f_m$.

La fréquence donnée par le codeur 3 est multipliée par

$$\frac{N_2.P}{N_1}$$

puis additionnée à la fréquence fixe de l'horloge $N_2.f_r$ pour générer l'horloge de lecture des mémoires 44.

L'amplitude des courants statoriques qui est déterminée à partir de la consigne de couple

$$\hat{I}_s = \sqrt{\frac{4C.L_r}{3pM^2}}$$

peut être légèrement corrigée en fonction de $w_s$ pour que le couple soit constant.

C = couple

$L_r$ = inductance propre cyclique du rotor

M = inductance mutuelle cyclique entre stator et rotor.

L'amplitude des courants ainsi élaborée est envoyée au convertisseur numérique-analogique 45 qui reçoit par ailleurs, $\sin w_s t$ et $\sin (w_s t - \frac{2\pi}{3})$

et délivre les consignes de courant $I^*_{s1} = \hat{I}_s \sin w_s t$

$I^*_{s2} = \hat{I}_s \sin(w_s t - \frac{2\pi}{3})$.

L'amplificateur de courant 2 rend les courants réels $i_{s1}$ et $i_{s2}$ conformes aux consignes $I^*_{s1}$ et $I^*_{s2}$.

Les deux premiers bras du pont sont commandés par comparaison des courants réels et des consignes. Le troisième bras du pont est commandé de manière à maintenir le potentiel moyen du bobinage égal au potentiel moyen de la source d'alimentation.

Comme le moteur est câblé en trois fils, le courant dans la troisième phase $i_{s3}$ est égal à $-i_{s1} - i_{s2}$ soit $\hat{I}_s \sin (w_s t - \frac{4\pi}{3})$.

Afin d'optimiser le couple, la pulsation rotorique $w_r$ est maintenue constante et égale à :

$$w_r = \frac{1}{\mathcal{T}_r} = \frac{R'_r}{L_r} = \frac{R'_r}{L_s + L'_{fr}} = g w_s$$

où $\mathcal{T}_r$ = constante de temps rotorique

$R'_r$ = résistance rotorique dans un schéma équivalent à la machine ramené au stator

$L'_{fr}$ = inductance de fuite du rotor dans ce même schéma

$L_{\mu s}$ = inductance de magnétisation dans ce même schéma.

## Revendications

1. Système de commande en couple d'un moteur asynchrone accouplé en rotation à un capteur de vitesse et dont les enroulements statoriques sont alimentés par un amplificateur à découpage piloté par une électronique de commande recevant le signal dudit capteur, caractérisé par le fait que le capteur est un codeur incrémental (3) à faible résolution et que l'électronique de commande comporte des moyens pour que l'amplificateur à découpage fournisse au moteur des courants sinusoidaux polyphasés équilibrés de manière à maintenir une pulsation constante des courants rotoriques.

2. Système selon la revendication 1, caractérisé par le fait qu'il comporte des moyens pour traiter le signal du capteur incrémental (3) par un multiplieur de fréquence (41), des moyens (42) pour additionner la fréquence sortant du multiplieur (41) à une fréquence d'horloge (43), des moyens pour envoyer le signal somme à des mémoires (44) contenant deux sinusoides échantillonnées et des moyens pour envoyer ces sinusoides échantillonnées sur un convertisseur numérique-analogique, (45) fournissant à l'amplificateur à découpage (2) des signaux sinusoidaux dont l'amplitude est par ailleurs déterminée par une consigne de couple de façon à ce que celui-ci alimente le moteur par des courants proportionnels à ces signaux.

3. Système selon la revendication 2, caractérisé par le fait qu'il comporte des moyens (46,47) recevant la consigne de couple et recevant le signal somme et fournissant un signal de correction au convertisseur numérique-analogique.

Consigne de couple

Elaboration de Îs — 47

Îs

Correction de Îs avec ωs — 46

Îs

EPROM contenant 2 sinusoïdes échantillonnées sur $N_2$ points — 44

sin ωst

sin $(ωst - \frac{2\pi}{3})$

DAC — 45

Îs sin ωst

Îs sin $(ωst - \frac{2\pi}{3})$

12v

6v

11   11   1

FIG.1

43 — Horloge à $N_2.fr$

42 — Additionneur de fréquences   $N_2.fs$

41 — Multiplieur de fréquen- × $\frac{N_2}{N_1}$ p   $N_2pfm$

$N_1.fm$

4

3

2

EP 0 388 274 A1

## FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | EP-A-85203 (SPINCOR S.A.) <br> * revendication 1; figure 1 * | 1 | H02P5/408 |
| A | PROCEEDINGS OF THE FIRST EUROPEAN CONFERENCE ON ELECTRICAL DRIVES/MOTORS/CONTROLS'82 <br> 01 juillet 1982, LEEDS, UK <br> pages 65 - 75; R.M. DAVIS: <br> "INVERTER-FED INDUCTION MACHINES" <br> * page 67, colonne 1, alinéa 7 * <br> * page 68, colonne 1, alinéa 7 * | 1 | |
| A | US-A-3387195 (V. PICCAND ET AL) <br> * figures 5, 10 * | 1, 2 | |
| A | US-A-4306182 (W.P. CURTISS) <br> * abrégé; figure 1 * | 1 | |
| A | EP-A-17403 (FUJITSU FANUC LTD) <br> * revendications 1, 3 * | 1 | |
| D,A | US-A-4628475 (HITACHI LTD) <br> * abrégé; figures 1, 2 * | 1 | DOMAINES TECHNIQUES RECHERCHES (Int. Cl.5 ) <br><br> H02P <br> G05D |

Le présent rapport a été établi pour toutes les revendications

| Lieu de la recherche | Date d'achèvement de la recherche | Examinateur |
|---|---|---|
| LA HAYE | 17 MAI 1990 | BEYER F. |